# EUROPÄISCHE PATENTSCHRIFT

(11) **EP 1 060 975 B1**
(45) Veröffentlichungstag und Bekanntmachung des Hinweises auf die Patenterteilung: **02.06.2004**
(21) Anmeldenummer: 00107748.6
(22) Anmeldetag: 11.04.2000
(51) Int. Cl.: B62D 33/06

(54) **Kabine für ein Fahrschulkettenfahrzeug**
Drivers cabin for a tracked teaching vehicle
Cabine du conducteur pour un véhicule d'apprentissage à chenille

(30) Priorität: 18.06.1999 DE 19927829
(43) Veröffentlichungstag der Anmeldung: 20.12.2000
(73) Patentinhaber: Rheinmetall Landsysteme GmbH, 24159 Kiel (DE)
(72) Erfinder: Kühl, Manfred, 24229 Schwedeneck (DE); Thiesen, Theodor, 24107 Kiel (DE); Reker, Alfred, 24159 Kiel (DE)
(74) Vertreter: Dietrich, Barbara

(56) Entgegenhaltungen:
- US-A- 4 099 590
- PATENT ABSTRACTS OF JAPAN vol. 008, no. 203 (M-326), 18. September 1984 (1984-09-18) & JP 59 092268 A (YANMAR DIESEL KK), 28. Mai 1984 (1984-05-28)

## Beschreibung

Die Erfindung betrifft eine Kabine für ein gepanzertes Fahrschulkettenfahrzeug oder Kampfpanzer nach den im Oberbegriff des Anspruchs 1 angegebenen Merkmalen.

Bei dem Einsatz von Kettenfahrzeugen für die Fahrausbildung hat es sich bewährt, modifizierte Originalfahrzeuge als Fahrschulpanzer zu verwenden, bei denen die Waffenanlage entfernt und das Waffenrohr durch eine Attrappe ersetzt wird sowie ein zweiter oder weitere Bedienplätze für den Fahrlehrer eingebaut sind, so daß alle Belange für die Fahrausbildung optimal berücksichtigt werden und im Fahrbetrieb Kosten gespart werden aufgrund des verminderten Fahrzeuggewichts und des Ausbaus von wartungsintensiven Waffenkomponenten.

Eine Vorrichtung gemäß dem Oberbegriff des Anspruchs 1 ist dem Fachmann allgemein bekannt.

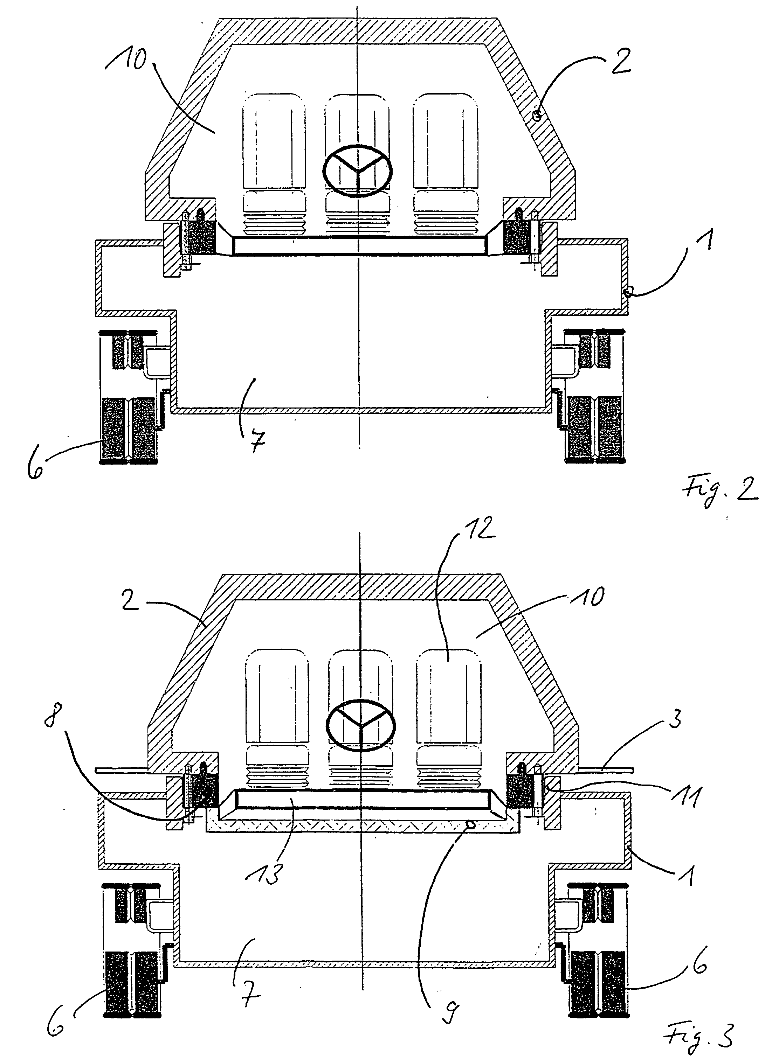

Die bekannten Fahrschulpanzer (siehe Figur 2) bestehen aus einem Fahrgestellgehäuse (1) mit angebautem Laufwerk (6), das dem Original des Kettenfahrzeugs entspricht für das die Fahrschulausbildung erfolgen soll, und einer Fahrschulkabine (2), die anstelle eines Panzerturmes oder einer Waffenanlage aufgesetzt ist und die nach unten offen in das Fahrzeuginnere (7) des Fahrgestells mündet. Die Kabinenplätze werden von einem Querträger getragen, der seitlich mit der Kabine verbunden ist. Der Zugang zu den Kabinenplätzen erfolgt derart, daß das Fahrzeuginnere über die Fahrerluke oder sonstige Luken, die am Originalfahrgestell vorhanden sind, betreten wird und die Plätze von innen durch den offenen Boden der Kabine besetzt werden, wobei der Auszubildende auf dem Originalfahrerplatz im Fahrgestell Platz nimmt.

Durch ihre Bauart bedingt übertragen Gleiskettenlaufwerke hohe Geräuschimmisionswerte in das Fahrzeuginnere. Über die sich auf dem Boden abwälzende Gleiskette werden die Gehäusewandungen über die Lauf- und Stützrollen und das Kettenantriebsrad und weitere Laufwerksteile zu Schwingungen angeregt. Diese Körperschallschwingungen erzeugen unerwünschte Luftschallwellen, die von den Gehäusewänden reflektiert und zu störenden Geräuschverursachern werden. Diese Störungen betreffen besonders die Fahrschulbesatzung in der Kabine.

Aufgabe der Erfinndung ist es deshalb, eine Fahrschulkabine herzustellen, die keine oder nur eine geringe Geräuschbelastung für die Besatzung in der Fahrschulkabine zuläßt.

Diese Aufgabe wird gelöst durch die Merkmale des Patentanspruchs 1. Vorteilhafte Ausgestaltungen gehen aus den Unteransprüchen hervor.

Der Erfindung liegt die Erkenntnis zugrunde, eine gekapselte Fahrschulkabine auf das Fahrgestell aufzusetzen. Die Kapselung der Kabine zum Innenraum des Fahrgestells wird gebildet durch einen massiven umlaufenden Rahmen, der in einer Öffnung des Fahrgestells bzw. in der Turmaufnahme fest verschraubt ist, und durch eine geräuschdämmende Konstruktionsplatte, die den Kabineninnenraum vom Fahrgestellinnenraum trennt. Die Kabine wird über eine schwenkbare Hecktür betreten, zu der man über eine Aufstiegshilfe am Fahrgestell sowie über einen Laufsteg an der Kabinenseite gelangt.

Ein Ausführungsbeispiel der Erfindung ist in der Zeichnung schematisch dargestellt. Es zeigen:
- Figur 1:: Seitenansicht Fahrschulfahrzeug mit Kabine
- Figur 2:: Schnitt Fahrschulfahrzeug ohne Kapselung
- Figur 3:: Schnitt Fahrschulfahrzeug mit Kapselung

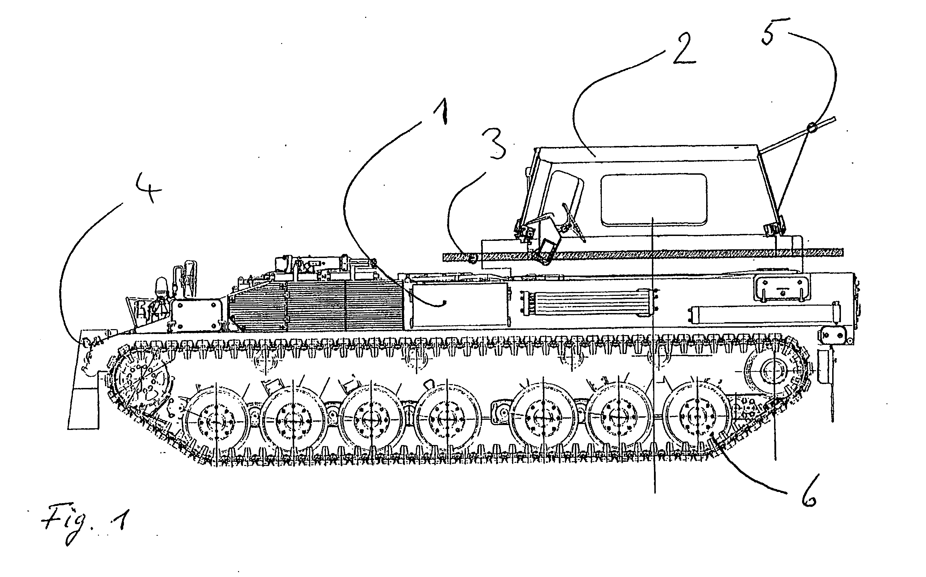

In Fig. 1 und 3 ist die erfindungsgemäße Ausführung der Kabine 2 dargestellt mit dem Basisfahrgestell 1 und den zugehörigen Laufwerksteilen 6. Die Fahrschulkabine 2 ist auf ein Loch im oberen Fahrgestellgehäuse bzw. der Turmaufnahme 11 aufgesetzt. Eine Aufstiegshilfe 4 und ein an der Kabine seitlich verlaufender Steg 3 erleichtern das Aufsteigen und das Gehen auf dem Fahrgestell bis zur schwenkbaren Hecktür 5, durch die der Innenraum 10 der Kabine erreicht wird. Die Bedienersitze 12 in der Kabine sind mittels einer Konsole 13 mit dem Kabinenaufbau fest verbunden. Ein in der Öffnung bzw. der Turmaufnahme 11 umlaufender Rahmen 8 verbindet die Kabine mit dem Fahrgestellgehäuse und ist mit diesem fest verschraubt. Unterhalb der Kabine wird der Kabineninnenraum mittels einer Plattenkonstruktion 9 abgeschlossen und gegen den Fahrgestellinnenraum 7 abgetrennt.

In Figur 2 ist eine Fahrschulkabine 2 ohne die erfindungsgemäße Einrichtung dargestellt. Die Kabine 2, 10 ist nach unten zum Fahrgestellinnenraum 7 offen und ohne Abtrennung ausgeführt.

## Patentansprüche

1. Vorrichtung für ein Fahrschulfahrzeug eines Kettenfahrzeugs oder für einen Fahrschulpanzer mit einem serienmäßigen Kettenfahrgestell (1, 6) und einer auf eine Turmaufnahme (11) nach Entfernen eines Panzerturms oder Waffenanlage aufgesetzten Fahrschulkabine (2) für die Aufnahme von weiterem Personal , **dadurch gekennzeichnet, daß**
- der Kabinenraum (10) der Fahrschulkabine (2) durch eine fest eingebaute geräuschdämmende Plattenkonstruktion (9) vom Fahrgestellinnenraum (7) abgetrennt ist und
- die Fahrschulkabine (2) durch einen massiv umlaufenden Rahmen (8) in der Turmaufnahme (11) mit dem Fahrgestellgehäuse fest verschraubt ist , wobei
- ein Zutritt zum Kabineninnenraum (10) durch eine schwenkbare Kabineneingangstür (5) erfolgt, die an der Fahrschulkabine (2) versehen ist.

2. Vorrichtung nach Anspruch 1, **dadurch gekennzeichnet, daß** die Plattenkonstruktion (9) entweder fest mit der aufsetzbaren Fahrschulkabine (2) oder fest mit der Turmaufnahme (11) verbunden ist.

3. Vorrichtung nach Anspruch 1, **dadurch gekennzeichnet, daß** die Fahrschulkabine (2) seitlich mit einem einfachen oder umlaufenden Laufsteg (3) versehen ist, der die Begehbarkeit des Fahrgestelldachs in Kabinennähe sichert.

4. Vorrichtung nach Anspruch 1 und 2, **dadurch gekennzeichnet, daß** die Plattenkonstruktion (9) als geräuschisolierende Schicht ausgebildet ist.

5. Vorrichtung nach Anspruch 1, **dadurch gekennzeichnet, dass** der Boden (9) eine oder mehrere Luken aufnimmt, die einen Durchstieg vom Kabinenraum (10) in den Fahrgestellinnenraum (7) und umgekehrt ermöglichen.

## Claims

1. Apparatus for a driving instruction vehicle of a tracked vehicle or for a driving instruction tank comprising a standard tracked chassis (1, 6) and a driving instruction cab (2), which is mounted onto a turret receiver (11) after removal of an armoured turret or weapons system, for accommodating further personnel, **characterized in that**
- the cab compartment (10) of the driving instruction cab (2) is separated from the chassis interior (7) by a rigidly installed sound-proofing plate construction (9) and
- the driving instruction cab (2) is firmly screw-connected to the chassis housing through a solid circumferential frame (8) in the turret receiver (11), wherein
- access to the cab interior (10) is effected through a hinged cab entry door (5), which is provided on the driving instruction cab (2).

2. Apparatus according to claim 1, **characterized in that** the plate construction (9) is connected either in a fixed manner to the mountable driving instruction cab (2) or in a fixed manner to the turret receiver (11).

3. Apparatus according to claim 1, **characterized in that** the driving instruction cab (2) is provided laterally with a single or peripheral catwalk (3), by means of which it is possible to walk on the chassis roof in the vicinity of the cab.

4. Apparatus according to claim 1 and 2, **characterized in that** the plate construction (9) is designed as a noise-insulating layer.

5. Apparatus according to claim 1, **characterized in that** the base (9) has one or more hatches, through which it is possible to pass from the cab compartment (10) to the chassis interior (7) and vice versa.

## Revendications

1. Dispositif pour véhicule auto-école de Véhicules à chenille ou pour un char-école pourvu d'un châssis à chenilles de série (1, 6) et d'une cabine d'auto-école (2) installée sur une monture de tourelle (11) après retrait d'une tourelle de char ou d'un système d'arme pour accueillir du personnel supplémentaire, **caractérisé en ce que**
l'habitacle (10) de la cabine d'auto-école (2) est séparé de l'espace intérieur du châssis (7) par une structure en plaque (9) phoniquement isolante montée fixement et
la cabine d'auto-école (2) est fixée par vissage à la caisse du châssis dans la monture de tourelle (11) au moyen d'un cadre massif (8) rotatif, un accès à l'habitacle de la cabine (10) étant effectué grâce à une porte d'entrée pivotante de la cabine (5) prévue sur la cabine d'auto-école (2)

2. Dispositif selon la revendication 1, **caractérisé en ce que** la structure en plaque (9) est fixée soit à la cabine d'auto-école (2) installable, soit à la monture de tourelle (11).

3. Dispositif selon la revendication 1, **caractérisé en ce que** la cabine d'auto-école (2) est pourvue latéralement d'une passerelle tournante (3), qui assure l'accessibilité du toit du châssis au voisinage de la cabine.

4. Dispositif selon la revendication 1 et 2, **caractérisé en ce que** la structure en plaque (9) est configurée comme une couche phoniquement isolante.

5. Dispositif selon la revendication 1, **caractérisé en ce que** le plancher (9) reçoit une ou plusieurs écoutilles qui permettent un passage de l'intérieur de la cabine (10) dans l'espace intérieur du châssis (7) et réciproquement.
